# EUROPÄISCHE PATENTANMELDUNG

(11) **EP 1 927 427 A2**
(43) Veröffentlichungstag der Anmeldung: **04.06.2008**
(21) Anmeldenummer: 07121501.6
(22) Anmeldetag: 26.11.2007
(51) Int. Cl.: B23P 21/00, B65G 1/127

(54) **Vorrichtung zur Einschleusung und/oder Ausschleusung von Bauteilen in einen Bearbeitungsprozess**

(30) Priorität: 29.11.2006 DE 102006056665
(71) Anmelder: ThyssenKrupp Drauz Nothelfer GmbH, 74076 Heilbronn (DE)
(72) Erfinder: Stein, Hans, 09337, Hohenstein-Ernstthal/OT Wüstenbra (DE); Wagner, Thomas, 09116, Chemnitz (DE); Seidel, Wilfried, 09119, Chemnitz (DE)
(74) Vertreter: Cohausz & Florack

(57) **Zusammenfassung**

Die Erfindung betrifft eine Vorrichtung zur Einschleusung von Bauteilen in einen Bearbeitungsprozess und/oder zur Ausschleusung von Bauteilen (3, 4, 6, 16, 26) aus einem Bearbeitungsprozess, insbesondere von Karosseriebauteilen von Kraftfahrzeugen. Um auf zeitsparende weise einen flexiblen Bearbeitungsprozess für eine große zahl typenverschiedener Bauteile zu ermöglichen, umfasst die Vorrichtung eine als Vertikalkarussell (1, 13, 14, 28, 33) nach dem Paternoster-Prinzip ausgebildete Bauteilübergabeinheit eine mit wenigstens drei Plattformen sowie ein auf der Bearbeitungsseite der Bauteilübergabeeinheit angeordnetes Positioniermittel (2, 18, 23, 20, 32) zur Entnahme der bearbeiteten Bauteile (3, 4, 6, 16, 26) oder zum Ablegen der zu bearbeitenden Bauteile (3, 4, 6, 16, 26) in eine der wenigstens drei Plattformen (1a, 1b, 1c, 13a, 14a, 28a, 33a). Ferner betrifft die Erfindung ein Verfahren zur Ein- und Ausschleusung von typenverschiedenen Bauteilen aus einem Bearbeitungsprozess und eine Fertigungseinrichtung.

## Beschreibung

Die Erfindung betrifft eine Vorrichtung zur Einschleusung von Bauteilen in einen Bearbeitungsprozess und/oder zur Ausschleusung von Bauteilen aus einem Bearbeitungsprozess, insbesondere von Karosseriebauteilen von Kraftfahrzeugen, mit einer wenigstens drei Plattformen zur Aufnahme von typenverschiedenen Bauteilen oder mit typenverschiedenen Bauteilen bestückten Transportbehältern umfassenden Bauteilübergabeeinheit und mit wenigstens einem auf der Bearbeitungsseite der Bauteilübergabeeinheit angeordneten Positioniermittel zur Entnahme der bearbeiteten Bauteile oder zum Ablegen der zu bearbeitenden Bauteile in eine der wenigstens zwei Plattformen. Ferner betrifft die Erfindung ein Verfahren zur Einschleusung von Bauteilen in einen Bearbeitungsprozess und/oder zur Ausschleusung von Bauteilen aus einem Bearbeitungsprozess sowie eine Fertigungseinrichtung für Bauteile.

Vorrichtungen zur Einschleusung oder Ausschleusung von Bauteilen in einen Bearbeitungsprozess sind aus dem Stand der Technik bekannt (z.B. WO 2006/082061 A1). Der zentrale Vorteil einer solchen Vorrichtung besteht darin, dass Bauteile verschiedener Art in ein und derselben Fertigungseinrichtung bearbeitet werden können. So können bei einem Kraftfahrzeug in beliebiger Reihenfolge Türen verschiedener Seiten, Dächer, Seitenteile und Hauben gefertigt werden.

Die aus der WO 2006/082061 A1 bekannte Vorrichtung zur Einschleusung von Bauteilen in einen Bearbeitungsprozess ist als Drehtisch oder kreis- oder ringförmiger Umlaufförderer ausgebildet, wobei in einer Ebene um die zentrale Drehachse des Drehtisches herum mehrere Aufnahmen für Bauteilhalter vorgesehen sind. Neben diesem Drehtisch ist ein in derselben Ebene angeordnetes weiteres Magazin angeordnet, das ebenfalls als Drehtisch ausgebildet sein kann und aus dem der erstgenannte Drehtisch mit typenverschiedenen Bauteilhaltern bestückt werden kann. Der erste Drehtisch dient nicht nur als Überführungsvorrichtung für die dem zweitgenannten Drehtisch entnommenen Bauteilhalter, sondern auch als Magazin für die auf ihm bereits platzierten Bauteilhalter. Nachteilig an der in der WO 2006/082061 A1 offenbarten Vorrichtung ist, dass sie eine vergleichseise hohe Stellfläche beansprucht, die mit der Anzahl der im Magazin bereitzustellenden verschiedenen bauteiltypischen Bauteilhalter noch wächst. Ferner ist die bekannte Vorrichtung hinsichtlich einer zeit- und aufwandsoptimierten externen Zuführung von Bauteilen oder mit Bauteilen bestückten Bauteilhalterungen nicht optimiert.

Aus der DE 199 45 126 A1 ist eine Hebe- und Senkvorrichtung für eine Fördervorrichtung an einer Montage- oder Fertigungsstraße bekannt. Das Taktrad ist dazu vorgesehen, einheitlich ausgebildete Bauteile von einer Förderhöhe, in der die Bauteile durch die Fertigungsstraße transportiert werden, auf eine Montagehöhe abzusenken, in welcher zwecks Durchführung eines Bearbeitungsschrittes an dem Bauteil (Lackieren) die Bauteile aus- und wiedereingeschleust werden, und anschließend wieder auf die Förderhöhe anzuheben, wo die Bauteile in der Fertigungsstraße weiter transportiert werden. Diese Vorrichtung ist auf typengleiche Bauteile zugeschnitten, so dass sie nicht in variablen Fertigungsprozessen unter Einsatz typenverschiedene Bauteil verwendet werden kann.

Ausgehend von diesem Stand der Technik liegt der Erfindung daher die Aufgabe zugrunde, eine Vorrichtung zur Einschleusung von Bauteilen in einen Bearbeitungsprozess und/oder zur Ausschleusung von Bauteilen aus einem Bearbeitungsprozess anzugeben, die es ermöglicht, in möglichst kurzer Zeit typenverschiedene Bauteile in einen Bearbeitungsprozess einzuschleusen oder aus diesem auszuschleusen, wobei der hierfür erforderliche technische Aufwand möglichst gering gehalten werden soll.

Die Aufgabe wird erfindungsgemäß mit einer Vorrichtung der eingangs genannten Art dadurch gelöst, dass die Bauteilübergabeeinheit als Vertikalkarussell nach dem Paternoster-Prinzip ausgebildet ist und die wenigstens drei Plattformen in dem Vertikalkarussell derart relativ zueinander angeordnet sind, dass in einer ersten Drehposition des Vertikalkarussells eine erste der wenigstens drei Plattformen durch das Positioniermittel bestückbar oder entladbar ist, während gleichzeitig eine zweite der wenigstens drei Plattformen auf der dem Positioniermittel gegenüberliegenden Seite des Vertikalkarussells durch ein Transportmittel bestückbar oder entladbar ist, während in einer dritten der wenigstens drei Plattformen mindestens ein Bauteil oder mindestens ein mit Bauteilen bestückter Transportbehälter zwischenspeicherbar ist, derart, dass das Vertikalkarussell gleichzeitig als Bauteilübergabeeinheit und Bauteilmagazin dient.

Die in der erfindungsgemäßen Vorrichtung vorgesehene, als Vertikalkarussell ausgebildete Bauteilübergabeeinheit beansprucht eine vergleichsweise geringe Stellfläche und ermöglicht es, Bauteile unterschiedlicher Art selbst oder mit diesen Bauteilen bestückte Transportbehälter in schneller Folge von einem beliebigen Transportmittel an das auf der Bearbeitungsseite des Vertikalkarussells Positioniermittel zu übergeben, welches seinerseits dann das übernommene Bauteil in einen Bearbeitungsprozess einschleust. Unter dem Begriff "Bearbeitungsseite" wird im Sinne der Erfindung hier die Seite des Vertikalkarussells verstanden, welche der Bearbeitungsstation, in welcher die Bauteile bearbeitet, beispielsweise gefügt werden, räumlich zugewandt ist.

Das Vertikalkarussell kann drei oder auch deutlich mehr Plattformen zur Aufnahme der Bauteile bzw. Bauteiltransportbehälter umfassen. In jedem Fall dient das Vertikalkarussell ebenso als Bauteilmagazin, welches identische oder typenverschiedene Bauteile zwischenspeichern kann, bevor sie in den Bearbeitungsprozess eingeschleust werden. Ebenso kann die erfindungsgemäße Vorrichtung auch zur Bauteilausschleusung als zur Bauteileinschleusung gegenläufigem Prozess dienen, wobei das Positioniermittel ein fertig bearbeitetes Bauteil in einer der in dem Vertikalkarussell vorgesehenen Plattformen oder in einem auf dieser Plattform platzierten Transportbehälter ablegt, woraufhin diese durch Rotation des Vertikalkarussells in eine Position bewegt wird, in der das fertig bearbeitete Bauteil entnommen und durch ein Transportmittel abtransportiert und ggf. einer weiteren Bearbeitung zugeführt werden kann.

Das erfindungsgemäß vorgesehene Positioniermittel kann beispielsweise als Positionierroboter oder auch als Portalanlage ausgebildet sein. Im Falle besonders langgestreckter Plattformen, die eine große Zahl von Bauteilen oder Transportbehältern für Bauteile aufnehmen können, kann es sinnvoll sein, den Positionierroboter über eine sich im wesentlichen parallel zur Drehachse des Vertikalkarussells erstreckenden Linearführung verfahrbar auszubilden. Hierdurch ist ein entlang der Drehachse des Vertikalkarussells beliebig erweiterbarer Wirkungsbereich des Roboters und somit die uneingeschränkte Erreichbarkeit der Plattform durch den Positionierroboter gewährleistet.

Nach einer weiteren Ausgestaltung der Erfindung ist vorgesehen, dass die wenigstens drei Plattformen nach Art von Gondeln horizontal drehbar in dem Vertikalkarussell gelagert sind. Hierdurch ist gewährleistet, dass die Nutzfläche der Plattformen stets horizontal ausgerichtet sind, so dass ein sicherer Transport der Bauteile bzw. der Transportbehälter für Bauteile in dem Vertikalkarussell gewährleistet ist. Die horizontale Ausrichtung der Plattformen kann durch deren eigene Schwerkraft bewirkt werden, sie kann jedoch auch durch eine mit dem Antrieb des Vertikalkarussells verbundene Zwangsführung der wenigstens drei Plattformen bewerkstelligt sein.

Ein wesentliches Merkmal der erfindungsgemäßen Vorrichtung ist, dass mit ihr eine beliebig große Zahl typenverschiedener Bauteile in einem Bearbeitungsprozess ein- bzw. aus einem Bearbeitungsprozess ausgeschleust werden kann. Hierzu muss sichergestellt sein, dass das erfindungsgemäß vorgesehene Positioniermittel mit entsprechenden Greifern ausgerüstet ist, um die verschiedenen Bauteiltypen sicher und schonend greifen zu können. Nach einer weiteren vorteilhaften Ausgestaltung der Erfindung ist daher vorgesehen, dass die Vorrichtung ein mit bauteilspezifischen Greifern bestücktes Greifermagazin umfasst. Alternativ oder ergänzend dazu können die bauteilspezifischen Greifer auch mit den Transportbehältern bereitgestellt werden.

Der Erfindung liegt ferner die Aufgabe zugrunde, ein Verfahren zur Einschleusung und/oder Ausschleusung von Bauteilen in einen Bearbeitungsprozess, insbesondere von Karosseriebauteilen von Kraftfahrzeugen, anzugeben, welches in schnellem Wechsel die Ein- oder Ausschleusung einer großen zahl typenverschiedener Bauteile in einem Bearbeitungsprozess unter geringem technischem Aufwand ermöglicht.

Die Aufgabe wird erfindungsgemäß mit einem Verfahren zur Einschleusung von Bauteilen in einen Bearbeitungsprozess und/oder zur Ausschleusung von Bauteilen aus einem Bearbeitungsprozess, insbesondere von Karosseriebauteilen von Kraftfahrzeugen, mittels einer Vorrichtung nach einem der Ansprüche 1 bis 7 gelöst, wobei in einer ersten Drehposition des Vertikalkarussells eine erste der wenigstens drei Plattformen des Vertikalkarussells durch das Positioniermittel entladen oder bestückt wird, während gleichzeitig eine zweite der wenigstens drei Plattformen auf der dem Positioniermittel gegenüberliegenden Seite des Vertikalkarussells durch ein Transportmittel entladen oder bestückt wird, wobei anschließend das Vertikalkarussell in eine zweite Drehposition rotiert, in der wiederum eine erste Plattform durch das Positioniermittel entladen oder bestückt wird, während gleichzeitig eine zweite der wenigstens drei Plattformen durch das Transportmittel entladen oder bestückt wird, wobei in jeder Drehposition in einer dritten der wenigstens drei Plattformen mindestens ein Bauteil oder mindestens ein mit Bauteilen bestückter Transportbehälter zwischengespeichert wird, derart, dass das Vertikalkarussell gleichzeitig als Bauteilübergabeeinheit und Bauteilmagazin dient.

Das erfindungsgemäße Verfahren ermöglicht eine schnelle und Ein- und Ausschleusung von Bauteilen verschiedener Art bei gleichzeitiger Möglichkeit der Zwischenspeicherung von Bauteilen und somit einen hocheffizienten und flexiblen und damit kostengünstigen Fertigungsprozess. Für die weiteren Vorteile des erfindungsgemäßen Verfahrens gilt im Übrigen das oben Gesagte.

Bei dem erfindungsgemäßen Verfahren können alle gängigen Transportmittel zum Einsatz kommen. Besonders flexibel ist der Einsatz von Flurförderfahrzeugen, insbesondere Gabelstaplern. Alternativ dazu ist es möglich, einen weiteren Positionierroboter als Transportmittel einzusetzen.

Die Erfindung wird im Folgenden anhand einer Ausführungsbeispiele darstellenden Zeichnung näher erläutert. Es zeigen:
- Fig. 1a,b: eine erfindungsgemäße Vorrichtung zur Einschleusung von Bauteilen in einen Bearbeitungsprozess und/oder Ausschleusung von Bauteilen aus einem Bearbeitungsprozess in teilweise geschnittener Seitenansicht in einer ersten und einer zweiten Drehposition,
- Fig. 2: die Vorrichtung aus Fig. 1 in der ersten Drehposition in Draufsicht,
- Fig. 3: eine Fertigungseinrichtung für Bauteile in Seitenansicht und
- Fig. 4: eine weitere Fertigungseinrichtung für Bauteile in Seitenansicht.

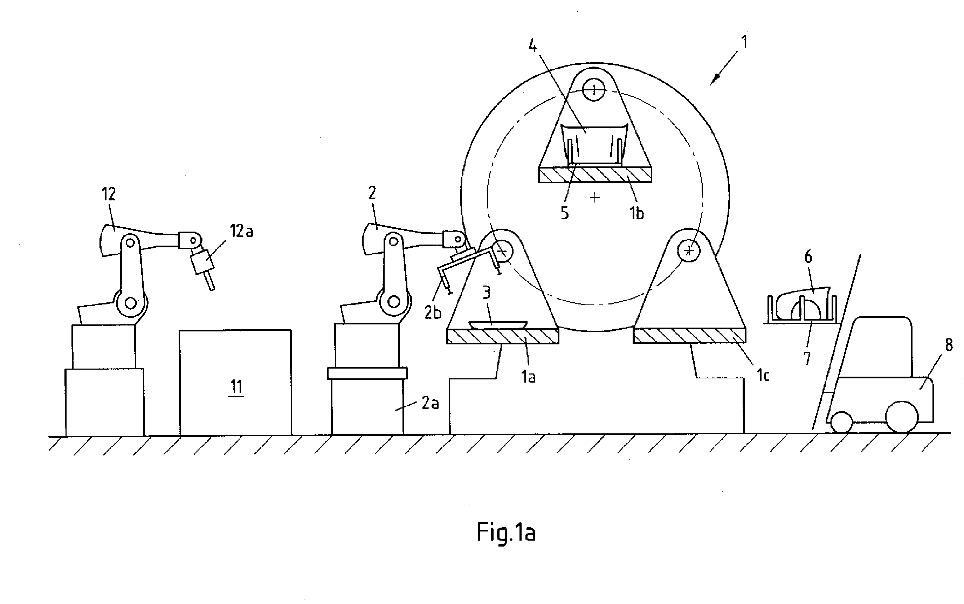

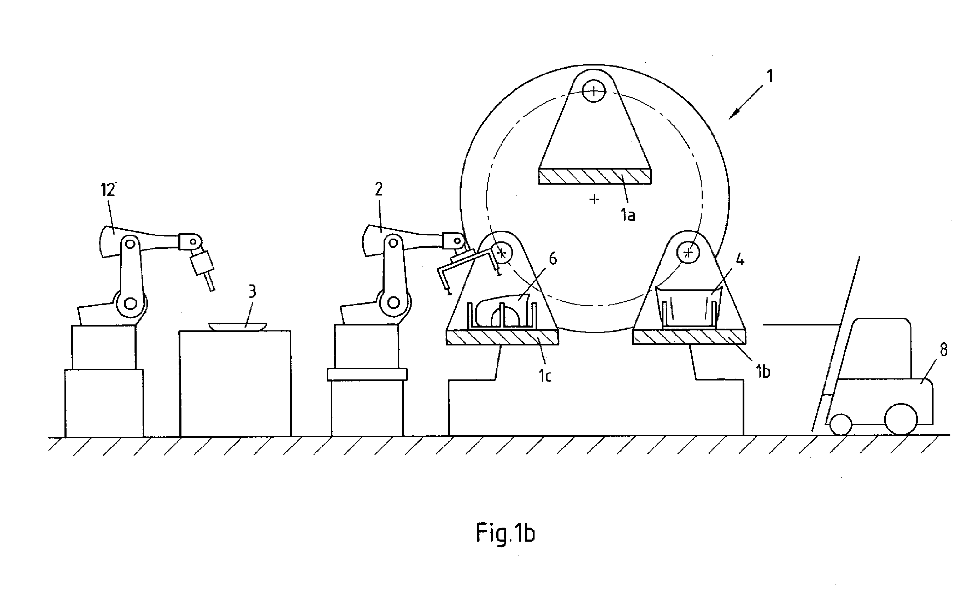

Die in den Fig. 1a,b dargestellte Vorrichtung zur Einschleusung von Bauteilen in einen Bearbeitungsprozess und/oder zur Ausschleusung von Bauteilen aus einem Bearbeitungsprozess umfasst eine als Vertikalkarussell 1 nach dem Paternoster-Prinzip ausgebildete Bauteilübergabeeinheit sowie einen auf der Bearbeitungsseite des Vertikalkarussells 1 angeordneten Positionierroboter 2. Das Vertikalkarussell 1 umfasst vorliegend insgesamt drei Plattformen 1a, 1b, 1c zur Aufnahme von Bauteilen 3 oder mit Bauteilen 4, 6 bestückten Transportbehältern 5, 7. Die Plattformen 1a, 1b, 1c sind vorliegend nach Art von Gondeln horizontal drehbar in dem Vertikalkarussell 1 gelagert, wobei die stets horizontale Ausrichtung der die Bauteile bzw. Transportbehälter aufnehmenden Plattformnutzflächen durch eine mit dem Antrieb des Vertikalkarussells 1 verbundene Zwangsführung sichergestellt wird.

Erfindungsgemäß sind nun jeweils zwei der vorliegend drei Plattformen 1a, 1b, 1c in dem Vertikalkarussell 1 derart relativ zueinander angeordnet, dass in der in der Fig. 1a gezeigten ersten Drehposition des Vertikalkarussells 1 eine der Plattformen 1a, 1b, 1c, nämlich die Plattform 1a, durch den Positionierroboter 2 bestückt oder entladen werden kann, während auf der dem Positionierroboter 2 gegenüberliegenden Seite des Vertikalkarussells 1 gleichzeitig eine andere Plattform 1a, 1b, 1c - vorliegend die Plattform 1c - durch einen Gabelstapler 8 ebenfalls bestückt oder entladen werden kann. Das Bauteil 4 wird vorliegend, wie in Fig. 1a dargestellt, in der Plattform 1b zwischengespeichert, so dass das erfindungsgemäße Vertikalkarussell gleichzeitig als Bauteilübergabeeinheit und Bauteilmagazin dient.

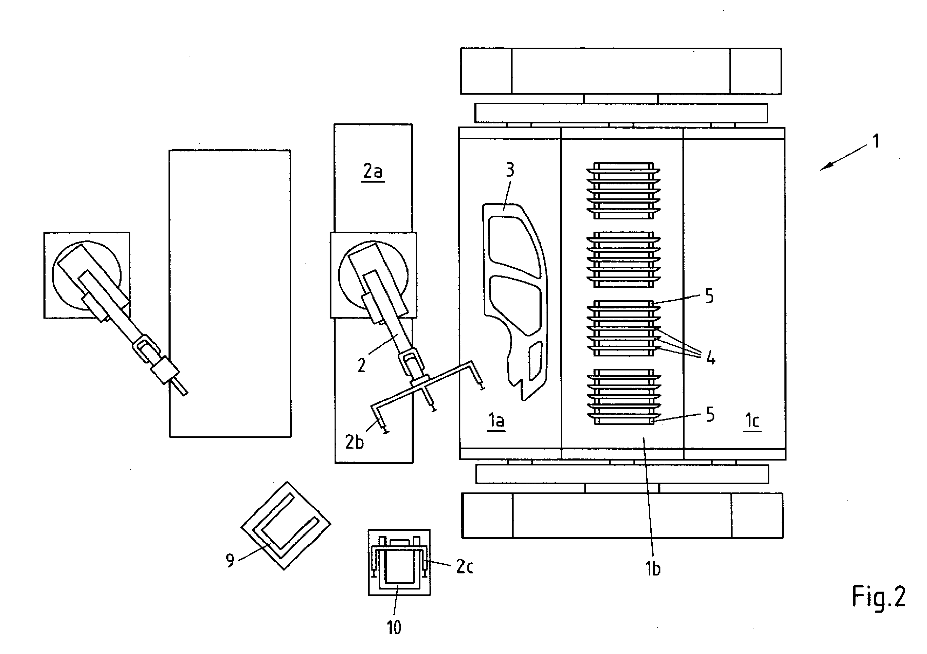

Wie in der Draufsicht der Fig. 2 erkennbar, ist der Positionierroboter 2 auf einer sich parallel zur Längsachse des Vertikalkarussells erstreckenden Linearführung 2a verfahrbar ausgebildet, so dass er problemlos sämtliche Positionen auf den Nutzflächen der Plattformen 1a erreichen kann.

Die Funktionsweise der erfindungsgemäßen Vorrichtung ist wie folgt:

Die Plattformen 1a und 1b des in den Figuren 1a und 2 dargestellten Vertikalkarussells 1 sind mit typenverschiedenen Bauteilen bzw. mit mit typenverschiedenen Bauteilen bestückten Transportbehältern beladen. Im Einzelnen ist auf der Plattform 1a eine Karosserieseitenwand 3 abgelegt, während auf der Plattform 1b insgesamt vier Transportbehälter 5 abgelegt sind, die jeweils mit einer Anzahl von Bauteilen 4, vorliegend jeweils fünf Motorhauben, bestückt sind, die in der Plattform 1b zwischengespeichert werden. Die Plattform 1c ist gegenwärtig nicht bestückt. In der in den Figuren 1a und 2 dargestellten ersten Drehposition des Vertikalkarussells 1 ist die Plattform 1a derart relativ zu dem Positionierroboter 2 angeordnet, dass dieser mit dem dem Greifermagazin 9 entnommenen Greifer 2b problemlos die auf der Plattform 1a abgelegte Karosserieseitenwand 3 greifen kann und diese nach einem 180°-Schwenk auf einem Bearbeitungstisch 11 ablegen kann (vgl. Fig. 1b). Auf diesem kann ein beispielsweise mit einem Schweißwerkzeug 12a ausgerüsteter Bearbeitungsroboter 12 die Karosserieseitenwand 3 bearbeiten. Gleichzeitig hierzu kann der in der Fig. 1a dargestellte Gabelstapler 8 die nicht bestückte Plattform 1c mit einem Bauteil 6, vorliegend einem Kotflügel, bestückten Transportbehälter 7 auf der Plattform 1c ablegen. Sobald dies erfolgt ist, kann das Vertikalkarussell im Uhrzeigersinn um 120° in eine zweite Drehposition gedreht werden (Fig. 1b), in welcher der Gabelstapler 8 nach und nach die Transportbehälter 5 mit den fertig bearbeiteten Motorhauben 4 entnehmen, abtransportieren und ggf. einer weiteren Bearbeitung oder dem Versand zuführen kann.

Während der Rotation des Vertikalkarussells 1 von der ersten in die in Fig. 1b dargestellte zweite Drehposition kann der Positionierroboter sein Greiferwerkzeug 2b in dem Greifermagazin 9 (vgl. Fig. 2) ablegen und unmittelbar im Anschluss daran einen neuen für das Bauteil 6 geeigneten Greifer 2c dem Greifermagazin 10 (vgl. Fig. 2) entnehmen, um in der zweiten Drehposition (Fig. 1b) das Bauteil 6 der Plattform 1c zu greifen und ebenfalls der Bearbeitung durch den Bearbeitungsroboter 12 zuzuführen. Die hierdurch entladene Plattform 1a kann sodann mit der fertig bearbeiteten Karosserieseitenwand 3 bestückt werden, die nach erneuter Rotation des Vertikalkarussells 1 im Folgenden dann durch den Gabelstapler 8 abtransportiert werden kann (nicht dargestellt).

Durch dieses sukzessive Entladen und Bestücken der einzelnen Plattformen 1a, 1b, 1c des Vertikalkarussells 1 mit Bauteilen oder leeren oder mit Bauteilen bestückten Transportbehältern kann somit eine große Anzahl typenverschiedener Bauteile in schnellem Wechsel und bei geringem anlagentechnischem Aufwand in einen Bearbeitungsprozess eingeschleust und aus diesem wieder ausgeschleust und abtransportiert werden.

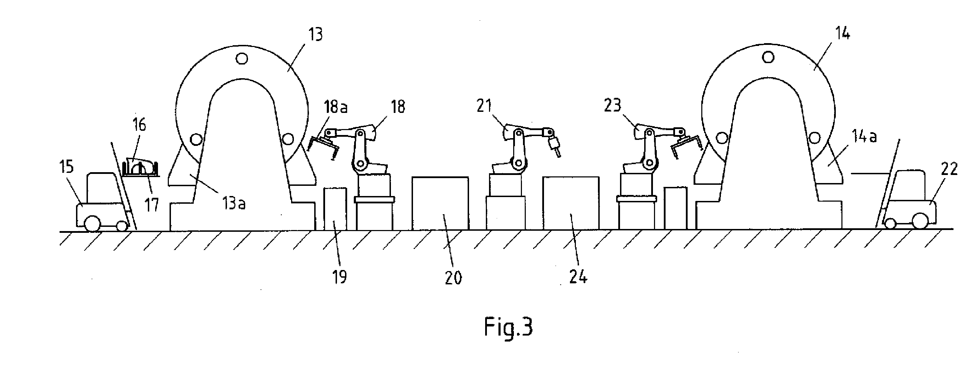

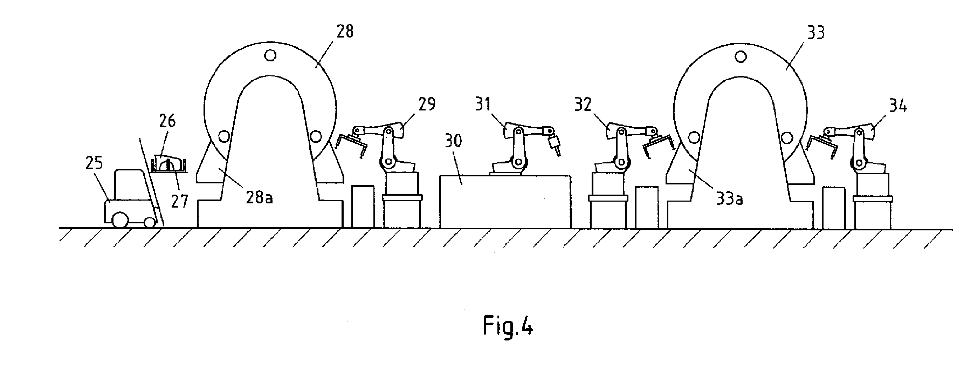

In den Figuren 3 und 4 sind nun als weitere Ausführungsbeispiele zwei Fertigungseinrichtungen für Karosseriebauteile von Kraftfahrzeugen dargestellt.

In der in Fig. 3 dargestellten Fertigungseinrichtung, die insgesamt zwei Vertikalkarusselle 13, 14, die mit dem in den Figuren 1a,b und 2 dargestellten Vertikalkarussell 1 im wesentlichen identisch sind, umfasst, transportiert ein Gabelstapler 15 von links kommend einen mit einem Kotflügel als Bauteil 16 bestückten Transportbehälter 17 und legt diesen in der dem Gabelstapler 15 in einer ersten Drehposition des Vertikalkarussells 13 zugewandten Plattform 13a des Vertikalkarussells 13 ab. Nach entsprechender Rotation des Vertikalkarussells 13 in eine zweite Drehposition (nicht dargestellt) kann der auf der gegenüberliegenden Seite des Vertikalkarussells 13 angeordnete Positionierroboter 18 nach Greifen eines für den Kotflügel 16 geeigneten Greifers 18a aus einem Greifermagazin 19 das Bauteil 16 aus der Plattform 13a entnehmen und auf einem Bearbeitungstisch 20 ablegen, wo das Bauteil im Anschluss durch einen Bearbeitungsroboter 21 bearbeitet wird. In völliger Symmetrie hierzu kann gleichzeitig zu dem vorstehend beschriebenen Ablauf ein weiterer Gabelstapler 22 von rechts kommend zu bearbeitende Bauteile (nicht dargestellt) in einer Plattform 14a des rechten Vertikalkarussells 14 ablegen, woraufhin dieses die Plattform 14a in eine Position rotiert, in der der Positionierroboter 23 das Bauteil greifen und auf einem Bearbeitungstisch 24 ablegen kann. Hier kann das Bauteil im Anschluss ebenfalls durch den Bearbeitungsroboter 21 bearbeitet werden. Nachdem die Bauteile auf den Tischen 20, 24 durch den Bearbeitungsroboter 21 bearbeitet wurden, werden sie durch die jeweiligen Positionierroboter 18, 23 wieder gegriffen und auf einer Plattform der Vertikalkarusselle 13, 14 abgelegt, woraufhin diese die Plattformen in eine zur Entnahme durch die Gabelstapler 15, 22 geeigneten Position rotieren.

In Fig. 4 ist eine linear arbeitende Fertigungseinrichtung dargestellt.

Hierbei belädt ein ein in einem Transportbehälter 27 gehaltenes Bauteil 26 (wiederum ein Kotflügel) tragender Gabelstapler 25 von links kommend eine Plattform 28a eines Vertikalkarussells 28. Dieses rotiert im Anschluss daran in eine Position, in der der Positionierroboter 29 das Bauteil 26 greifen und auf einem Bearbeitungstisch 30 ablegen kann. Dort wird das Bauteil durch einen Bearbeitungsroboter 31 bearbeitet und nach erfolgter Bearbeitung durch den Positionierroboter 32 gegriffen. Dieser legt das fertig bearbeitete Bauteil nunmehr auf der Plattform 33a des Vertikalkarussells 33 ab. Das Vertikalkarussell 33 bringt sodann die das in einem nicht dargestellten Transportbehälter abgelegte Bauteil 26 tragende Plattform 33a in eine Position, in welcher der Positionierroboter 34 das Bauteil 6 greifen kann, um es einer weiteren Bearbeitung zuzuführen.

## Patentansprüche

1. Vorrichtung zur Einschleusung von Bauteilen in einen Bearbeitungsprozess und/oder zur Ausschleusung von Bauteilen (3, 4, 6, 16, 26) aus einem Bearbeitungsprozess, insbesondere von Karosseriebauteilen von Kraftfahrzeugen, mit einer wenigstens drei Plattformen zur Aufnahme von typenverschiedenen Bauteilen (3, 4, 6, 16, 26) oder mit typenverschiedenen Bauteilen (3, 4, 6, 16, 26) bestückten Transportbehältern (5, 7, 17, 27) umfassenden Bauteilübergabeeinheit und mit wenigstens einem auf der Bearbeitungsseite der Bauteilübergabeeinheit angeordneten Positioniermittel (2, 18, 23, 20, 32) zur Entnahme der bearbeiteten Bauteile (3, 4, 6, 16, 26) oder zum Ablegen der zu bearbeitenden Bauteile (3, 4, 6, 16, 26) in eine der wenigstens zwei Plattformen,
**dadurch gekennzeichnet, dass**
die Bauteilübergabeeinheit als Vertikalkarussell (1, 13, 14, 28, 33) nach dem Paternoster-Prinzip ausgebildet ist und die wenigstens drei Plattformen (1a, 1b, 1c, 13a, 14a, 28a, 33a) in dem Vertikalkarussell (1, 13, 14, 28, 33) derart relativ zueinander angeordnet sind, dass in einer ersten Drehposition des Vertikalkarussells (1, 13, 14, 28, 33) eine erste der wenigstens drei Plattformen (1a, 1b, 1c, 13a, 14a, 28a, 33a) durch das Positioniermittel (2, 18, 23, 20, 32) bestückbar oder entladbar ist, während gleichzeitig eine zweite der wenigstens drei Plattformen (1a, 1b, 1c, 13a, 14a, 28a, 33a) auf der dem Positioniermittel (2, 18, 23, 20, 32) gegenüberliegenden Seite des Vertikalkarussells (1, 13, 14, 28, 33) durch ein Transportmittel (8, 15, 22, 25, 34) bestückbar oder entladbar ist, während in einer dritten der wenigstens drei Plattformen (1a, 1b, 1c, 13a, 14a, 28a, 33a) mindestens ein Bauteil (3, 4, 6, 16, 26) oder mindestens ein mit Bauteilen (3, 4, 6, 16, 26) bestückter Transportbehälter (5, 7, 17, 27) zwischenspeicherbar ist, derart, dass das Vertikalkarussell gleichzeitig als Bauteilübergabeeinheit und Bauteilmagazin dient.

2. Vorrichtung nach Anspruch 1,
**dadurch gekennzeichnet, dass**
das Positioniermittel als Positionierroboter (2, 18, 23, 20, 32) ausgebildet ist.

3. Vorrichtung nach Anspruch 2,
**dadurch gekennzeichnet, dass**
der Positionierroboter (2, 18, 23, 20, 32) über eine sich im wesentlichen parallel zur Drehachse des Vertikalkarussels (1, 13, 14, 28, 33) erstreckenden Linearführung (2a) verfahrbar ausgebildet ist.

4. Vorrichtung nach einem der Ansprüche 1 bis 3,
**dadurch gekennzeichnet, dass**
die wenigstens zwei Plattformen (1a, 1b, 1c, 13a, 14a, 28a, 33a) nach Art von Gondeln horizontal drehbar in dem Vertikalkarussell (1, 13, 14, 28, 33) gelagert sind.

5. Vorrichtung nach einem der Ansprüche 1 bis 4,
**dadurch gekennzeichnet, dass**
das Vertikalkarussell (1, 13, 14, 28, 33) eine mit dem Antrieb des Vertikalkarussells (1, 13, 14, 28, 33) verbundene Zwangsführung der wenigstens zwei Plattformen (1a, 1b, 1c, 13a, 14a, 28a, 33a) umfasst.

6. Vorrichtung nach einem der Ansprüche 1 bis 5,
**dadurch gekennzeichnet, dass**
die Vorrichtung ein mit bauteilspezifischen Greifern (2b, 2c, 18a) bestücktes Greifermagazin (9, 10, 19) umfasst.

7. Vorrichtung nach einem der Ansprüche 1 bis 6,
**dadurch gekennzeichnet, dass**
die Transportbehälter (5, 7, 17, 27) bauteilspezifische Greifer enthalten.

8. Verfahren zur Einschleusung von Bauteilen (3, 4, 6, 16, 26) in einen Bearbeitungsprozess und/oder zur Ausschleusung von Bauteilen (3, 4, 6, 16, 26) aus einem Bearbeitungsprozess, insbesondere von Karosseriebauteilen von Kraftfahrzeugen, mittels einer Vorrichtung nach einem der Ansprüche 1 bis 7, wobei in einer ersten Drehposition des Vertikalkarussells (1, 13, 14, 28, 33) eine erste der wenigstens drei Plattformen (1a, 1b, 1c, 13a, 14a, 28a, 33a) des Vertikalkarussells (1, 13, 14, 28, 33) durch das Positioniermittel (2, 18, 23, 20, 32) entladen oder bestückt wird, während gleichzeitig eine zweite der wenigstens drei Plattformen (1a, 1b, 1c, 13a, 14a, 28a, 33a) auf der dem Positioniermittel (2, 18, 23, 20, 32) gegenüberliegenden Seite des Vertikalkarussells (1, 13, 14, 28, 33) durch ein Transportmittel entladen oder bestückt wird, wobei anschließend das Vertikalkarussell (1, 13, 14, 28, 33) in eine zweite Drehposition rotiert, in der wiederum eine erste Plattform (1a, 1b, 1c, 13a, 14a, 28a, 33a) durch das Positioniermittel (2, 18, 23, 20, 32) entladen oder bestückt wird, während gleichzeitig eine zweite der wenigstens drei Plattformen (1a, 1b, 1c, 13a, 14a, 28a, 33a) durch das Transportmittel (8, 15, 22, 25, 34) entladen oder bestückt wird, wobei in jeder Drehposition in einer dritten der wenigstens drei Plattformen (1a, 1b, 1c, 13a, 14a, 28a, 33a) mindestens ein Bauteil (3, 4, 6, 16, 26) oder mindestens ein mit Bauteilen (3, 4, 6, 16, 26) bestückter Transportbehälter (5, 7, 17, 27) zwischengespeichert wird, derart, dass das Vertikalkarussell gleichzeitig als Bauteilübergabeeinheit und Bauteilmagazin dient.

9. Verfahren nach Anspruch 8,
**dadurch gekennzeichnet, dass**
das Transportmittel ein Flurförderfahrzeug, insbesondere ein Gabelstapler (8, 15, 22, 25), ist.

10. Fertigungsseinrichtung für Bauteile (3, 4, 6, 16, 26), insbesondere für Karosseriebauteile von Kraftfahrzeugen, umfassend wenigstens eine Vorrichtung zur Einschleusung und/oder Ausschleusung von Bauteilen (3, 4, 6, 16, 26) sowie wenigstens eine Bearbeitungsstation, wobei die wenigstens eine Vorrichtung nach einem der Ansprüche 1 bis 7 ausgebildet ist.

11. Fertigungsseinrichtung nach Anspruch 10,
**dadurch gekennzeichnet, dass**
die Fertigungsseinrichtung linear aufgebaut ist und in Produktionsrichtung eine Vorrichtung zur Einschleusung von Bauteilen (3, 4, 6, 16, 26), eine Bearbeitungsstation und eine Vorrichtung zur Ausschleusung von Bauteilen (3, 4, 6, 16, 26) umfasst, wobei wenigstens eine der Vorrichtungen nach einem der Ansprüche 1 bis 7 ausgebildet ist.
